# EUROPÄISCHE PATENTSCHRIFT

(11) **EP 0 784 199 B1**
(45) Veröffentlichungstag und Bekanntmachung des Hinweises auf die Patenterteilung: **15.07.1998**
(21) Anmeldenummer: 96100453.8
(22) Anmeldetag: 13.01.1996
(51) Int. Cl.: G01D 5/16

(54) **Magnetische Sensoranordnung**
Magnetic sensor arrangement
Dispositif détecteur magnétique

(43) Veröffentlichungstag der Anmeldung: 16.07.1997
(73) Patentinhaber: Dr. Johannes Heidenhain GmbH, D-83292 Traunreut (DE)
(72) Erfinder: Spies, Alfons, Dipl.-Ing., D-83358 Seebruck (DE)

(56) Entgegenhaltungen:
- EP-A- 0 146 312
- EP-A- 0 190 639
- DE-A- 4 203 073
- DE-A- 4 233 331
- US-A- 4 845 456

## Beschreibung

Die vorliegende Erfindung betrifft eine magnetische Sensoranordnung zur Abtastung einer magnetischen Meßteilung. Eine derartige Sensoranordnung eignet sich beispielsweise zum Einsatz in einer Längenoder Winkelmeßeinrichtung.

Neben bekannten optischen Positionsmeßeinrichtungen finden zusehens auch magnetische Positionsmeßeinrichtungen Verwendung. Insbesondere beim Einsatz in Werkzeugmaschinen zeichnen sich magnetische Meßsysteme durch eine geringere Empfindlichkeit gegenüber Verschmutzung aus.
Innerhalb derartiger Meßsysteme werden üblicherweise magnetische Meßteilungen mit einer periodischen Magnetisierung von magnetischen Sensoranordnungen abgetastet und die Abtastsignale in bekannter Art und Weise in einer Auswerteinheit weiterverarbeitet. Neben verschiedenen Sensoranordnungen, die nach dem Hall-Prinzip arbeiten, eignen sich besonders sogenannte magnetoresistive Sensoren zum Einsatz in magnetischen Meßsystemen.

Eine Positionsmeßeinrichtung mit einer magnetischen Sensoranordnung ist etwa aus der DE 43 16 221 bekannt. Diese umfaßt Gruppen von magnetoresistiven Schichtstreifen, die in Abhängigkeit von der magnetischen Teilungsperiode in bestimmten Abständen zueinander parallel auf einem Trägersubstrat aufgebracht sind. Die vorgeschlagenen Anordnungen erweisen sich jedoch als noch nicht optimal hinsichtlich einer möglichst kompakten Anordnung. Ferner können die Abtastsignale aufgrund der gewählten Sensoranordnung nicht vollständig über eine Signalperiode der magnetischen Meßteilung gewonnen werden.

Eine weitere Sensoranordnung für magnetische Positionsmeßeinrichtungen ist in der DE 42 37 540 offenbart. Dort werden jeweils Achter-Gruppen von magnetoresistiven Sensorstreifen miteinander verbunden. Es finden sich in diesem Dokument jedoch keine näheren Angaben zur geeigneten Verschaltung der Sensorstreifen. Desweiteren überkreuzen sich die elektrischen Verbindungsleitungen der Sensorstreifen, was wiederum Schwierigkeiten bei der Fertigung einer derartigen Sensoranordnung bedeutet. Insbesondere erfordert die vorgeschlagene Führung der Verbindungsleitungen auf dem Trägersubstrat die Herstellung aufwendiger, mehrdimensionaler Schichtstrukturen.

Eine weitere Möglichkeit zur Anordnung der magnetoresistiven Schichtstreifen zeigt die US 4,594,548. Dort werden verschiedene Verschaltungs-Varianten für die magnetoresistiven Schichtstreifen vorgeschlagen, ohne jedoch auf Details zur geeigneten Führung und Anordnung der erforderlichen elektrischen Verbindungsleitungen auf einem Sensorchip einzugehen.

Weitere Ausführungsformen einer Sensoranordnung für eine magnetische Positionsmeßeinrichtung sind ferner aus der DE 42 03 073 sowie aus der DE 42 12 737 bekannt.

So offenbart etwa die DE 42 03 073 A1, wie eine gruppenweise Anordnung von magnetoresistiven Elementen in einer magnetischen Sensoranordnung von magnetische Positionsmeßeinrichtungen ausgebildet werden kann. Problematisch hierbei erweist sich jedoch, daß die elektrischen Verbindungsleitungen sich zumindest teilweise überkreuzen, woraus wiederum ein gewisser Aufwand bei der Fertigung einer derartigen Sensoranordnung die Folge ist.

Eine weitere magnetische Sensoranordnung ist in der US 4,845,456 offenbart. Dort wird ebenfalls vorgeschlagen, mehrere Gruppen von magnetoresistiven Elementen in einer bestimmten Art und Weise miteinander zu verschalten. Nachteilig an der vorgeschlagenen Anordnung ist, daß insgesamt eine große räumliche Ausdehnung der Sensoranordnung in Meßrichtung vorgesehen ist. Daraus wiederum resultieren Fehlereinflüsse bei der Positionsmessung, da nicht alle Signalanteile identisch von der abgetasteten Meßteilung beeinflußt werden.

In der EP 0 146 312 A2 ist desweiteren offenbart, daß innerhalb eines optischen Drehgebers flexible Leiterbänder eingesetzt werden können, um darauf bestimmte Bauelemente anzuordnen. Hinweise bezüglich der Ausgestaltung einer geeigneten magnetischen Sensoranordnung finden sich darin jedoch nicht.

Eine weitere Anordnungsmöglichkeit von magnetoresistiven Schichtstreifen in Bezug auf die Teilungsperiode der damit abgetasteten magnetischen Teilungsstruktur ist aus der DE 42 33 331 A1 bekannt. Nachteilig an der vorgeschlagenen Anordnung ist jedoch, daß die Signalgewinnung aus relativ wenigen magnetoresistiven Schichtstreifen resultiert.

Aus der EP 0 190 639 A2 ist schließlich ein magnetischer Drehgeber bekannt, der ebenfalls auf Basis einer magnetischen Sensoranordnung mit magnetoresistiven Schichtstreifen funkioniert. Hierbei ist erstrecken sich die magnetoresistiven Schichtstreifen relativ zur abgetasteten Meßteilung wiederum über mehrere Teilungsperioden. Es resultieren Fehler in der Positionsmessung aufgrund der unterschiedlichen Beeinflussung der magnetoresistiven Schichtstreifen in verschiedenen Teilungsperioden der abgetasteten Meßteilung.

Aufgabe der vorliegenden Erfindung ist es, eine magnetische Sensoranordnung zu schaffen, die sowohl möglichst einfach zu fertigen ist als auch eine zuverlässige Signalgewinnung im Meßbetrieb sicherstellt.

Diese Aufgabe wird gelöst durch eine magnetische Sensoranordnung mit den Merkmalen des Anspruches 1.

Vorteilhafte Ausführungsformen der erfindungsgemäßen magnetischen Sensoranordnung ergeben sich aus den Merkmalen der abhängigen Ansprüche.

Eine magnetische Positionsmeßeinrichtung mit der erfindungsgemäßen Sensoranordnung ist Gegenstand des Anspruches 12.

Die erfindungsgemäße magnetische Sensoranordnung ermöglicht eine einfache Fertigung auf einem Trägersubstrat. Insbesondere resultieren dabei keine Schwierigkeiten wegen einer eventuell erforderlichen, mehrdimensionalen Anordnung der elektrischen Verbindungsleitungen, welche sich überkreuzen. Die gesamte Sensorstruktur kann vielmehr in wenigen Bearbeitungsschritten in einer Ebene gefertigt werden, da die Verbindungsleitungen sowohl kreuzungsfrei zueinander als auch kreuzungsfrei mit den magnetoresistiven Schichtstreifen verlaufen.

Ferner ist aufgrund der erfindungsgemäßen, gruppenweisen Anordnung von magnetoresistiven Schichtstreifen sichergestellt, daß die zu einer Vollbrükke verschalteten Schichtstreifen räumlich relativ nahe beieinander liegen und somit die Erfassung von Signalen ermöglichen, die innerhalb einer Meßteilungs-Periode liegen. Damit wiederum sind mögliche Meßfehler ausgeschaltet, die etwa bei einer schräg zur Meßteilung angeordneten Sensoranordnung resultieren können, wenn die zu einer Vollbrücke gehörenden Schichtstreifen zu weit voneinander getrennt liegen.

Desweiteren ist hinsichtlich einer einfachen Fertigung vorteilhaft, wenn die magnetoresistiven Schichtstreifen der Sensoranordnung nicht vollständig direkt auf dem Trägersubstrat eines Sensorchips verschaltet werden. In einer vorteilhaften Ausführungsform der vorliegenden Erfindung erfolgt die Verschaltung hingegen mindestens teilweise in einem flexiblen Leiterband, welches die Sensoranordnung mit der nachgeordneten Auswerteelektronik verbindet.

Weitere Vorteile sowie Einzelheiten der erfindungsgemäßen magnetischen Sensoranordnung ergeben sich aus der nachfolgenden Beschreibung von Ausführungsbeispielen anhand der beiliegenden Figuren.

Hierbei zeigt
- Figur 1A: eine schematisierte Teil-Darstellung einer ersten Ausführungsform der erfindungsgemäßen magnetischen Sensoranordnung zusammen mit einer magnetischen Meßteilung;
- Figur 1B: die prinzipielle Verschaltung der magnetoresistiven Schichtstreifen aus Fig. 1A zu geeigneten Meßbrücken;
- Figur 2: eine Komplettansicht einer Ausführungsform eines Sensorchips nach den Fig. 1A und 1B;
- Figur 3: die Unter- und Oberseite eines flexiblen Leiterbandes, welches mit dem Sensorchip aus Fig. 2 verbunden wird;
- Figur 4: eine schematisierte Teil-Darstellung einer zweiten Ausführungsform der erfindungsgemäßen magnetischen Sensoranordnung zusammen mit einer magnetischen Meßteilung.

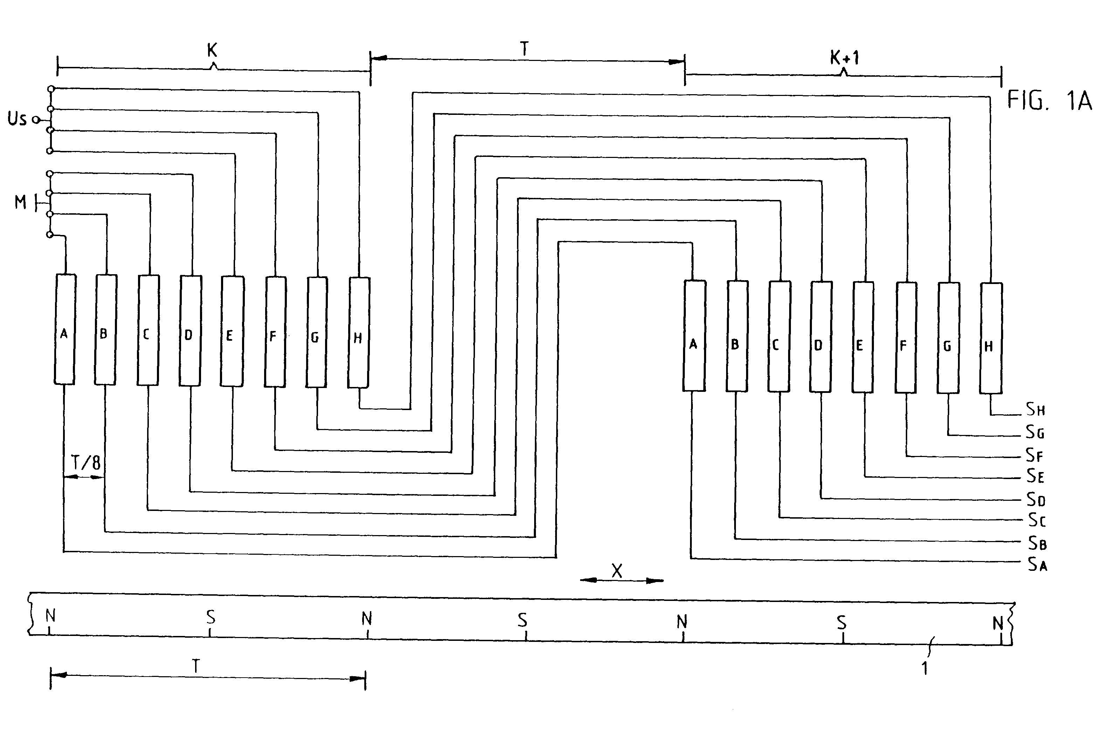

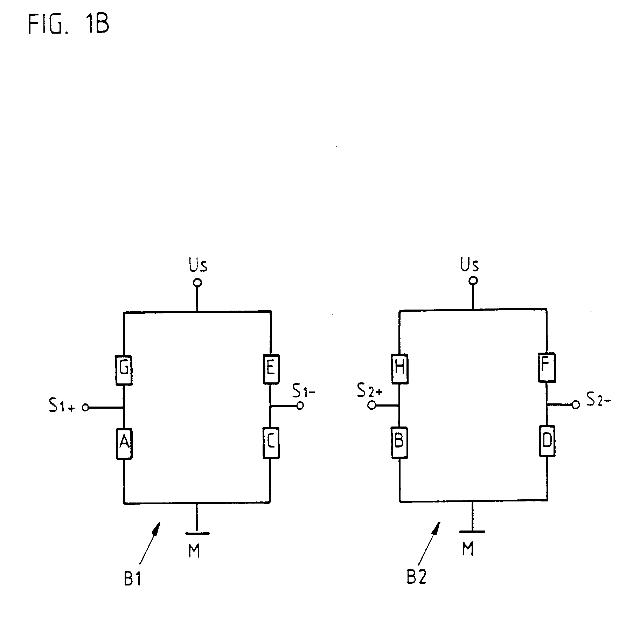

Figur 1A zeigt den prinzipiellen Aufbau einer ersten Ausführungsform der erfindungsgemäßen magnetischen Sensoranordnung in einer schematisierten Teildarstellung. Ersichtlich sind hierbei zwei Gruppen K und K+1 der Sensoranordnung mit je acht parallel angeordneten magnetoresistiven Schichtstreifen (A...H). Daneben sind die elektrischen Verbindungsleitungen zwischen den Schichtstreifen (A...H) bzw. den benachbarten Gruppen K und K+1 sowie ein Teil der abzutastenden magnetischen Meßteilung (1) erkennbar. Im Meßbetrieb ist die Ebene der Sensoranordnung mit den magnetoresistiven Schichtstreifen (A...H), die in der Darstellung der Fig. 1 der Zeichenebene entspricht, der Meßteilung (1) parallel und in geringem Abstand gegenüberliegend angeordnet. Die Meßteilung (1) des dargestellten Ausführungsbeispieles weist eine periodische Magnetisierung in der zu erfassenden Bewegungsrichtung x mit der Teilungsperiode T auf, wobei T den Abstand zwischen zwei Nord- oder Südpolen (N, S) bezeichnet und in einer möglichen Ausführungsform ca. 400 µm beträgt. Neben der ersten Spur mit dem periodischen Magnetisierungsmuster kann auf der Meßteilung (1) eine parallele weitere Spur vorgesehen werden, die in bestimmten Abständen angebrachte Referenz-Marken aufweist. Derartige Referenzmarken sind als definierte Magnetisierungsmuster auf dem Meßteilungs-Träger ausgeführt, beispielsweise als magnetische Nord-Südpol-Markierung etc..

Alternativ zur Magnetisierung in Form einer periodischen Aneinanderreihung von magnetischen Nordund Südpolen, d.h. einer sogenannten einseitig mehrpoligen Magnetisierung, können auch andere periodische Magnetisierungsmuster wie z.B. eine axial mehrpolige Magnetisierung etc. in der Signalspur der magnetischen Meßteilung eingesetzt werden. Neben einer permanentmagnetischen Meßteilung ist zudem auch die Erzeugung einer magnetischen Meßteilung mittels einer geeigneten Elektromagneten-Anordnung prinzipiell möglich.

Im dargestellten Ausführungsbeispiel ist eine Relativbewegung zwischen der magnetischen Meßteilung (1) und der magnetischen Sensoranordnung, die in eine geeignete Abtasteinheit integriert ist, in Pfeil-Richtung vorgesehen, welche im folgenden als x-Richtung bezeichnet wird. Diese Richtung ist senkrecht zur Längsachse der magnetoresistiven Schichtstreifen (A...H) orientiert. Die magnetische Meßteilung (1) und die Abtasteinheit mit der erfindungsgemäßen Sensoranordnung können beispielsweise an verschiedenen Teilen einer Werkzeugmaschine angeordnet sein, zwischen denen die exakte Relativlage zu erfassen ist.

Bei der in Figur 1A dargestellten Ausführungsform der erfindungsgemäßen Sensoranordnung sind innerhalb einer Teilungsperiode (T) der magnetischen Meßteilung (1) acht magnetoresistive Schichtstreifen (A...H) in gleichmäßigen Abständen T/8 zueinander angeordnet, wobei die komplette Sensoranordnung üblicherweise mehrere Gruppen derartiger Schichtstreifen (A...H) umfaßt. Bei einer Relativ-bewegung zwischen der Meßteilung (1) und der Sensoranordnung resultieren periodische Ausgangssignale aufgrund des sich wegen dem periodischen Meßteilungs-Magnetfeldes ändernden Widerstandes innerhalb der magnetoresistiven Schichtstreifen (A...H).

Grundsätzlich können sich die Gruppen von magnetoresistiven Schichtstreifen auch über mehr als eine einzige Teilungsperiode T erstrecken, wobei pro Teilungsperiode n Schichtstreifen vorgesehen sind. Es ergeben sich somit j * n Schichtstreifen pro Gruppe, mit j=1, 2, 3 Hierbei gilt stets j>=1. Im oben erläuterten Ausführungsbeispiel wurde demnach j=1 gewählt.
Innerhalb der Gruppen weisen die benachbarten n magnetoresistiven Elemente den Abstand T/n zueinander auf.

Die Schichtstreifen (A...H) sind aus Permalloy gefertigt und werden auf einem geeigneten Trägersubstrat angeordnet. Als alternatives magnetoresistives Material käme z.B. auch CoFe in Betracht.
Zwischen den benachbarten Schichtstreifen-Gruppen (K; K +1) beträgt der Abstand im dargestellten Ausführungsbeispiel genau eine Teilungsperiode T. Über elektrische Verbindungsleitungen sind jeweils die m-ten Schichtstreifen der benachbarten Gruppen (K; K+1) seriell miteinander verbunden, d.h. der von links erste Schichtstreifen (A) der K-ten Gruppe ist mit dem von links aus ersten Schichtstreifen (A) der (K+1)-ten Gruppe verbunden usw.. Die elektrischen Verbindungsleitungen zwischen diesen Schichtstreifen (A...H) sind etwa S-förmig in einer Ebene in den Zwischenräumen zwischen den benachbarten Gruppen angeordnet, ohne sich zu überkreuzen. In der gleichen Ebene sind jeweils auch die magnetoresistiven Schichtstreifen (A...H) angeordnet, so daß eine einfache Fertigung der erfindungsgemäßen Sensoranordnung in nur wenigen Arbeitsschritten möglich ist. Es müssen hierbei insbesondere keine komplexen mehrdimensionalen Strukturen gefertigt werden.

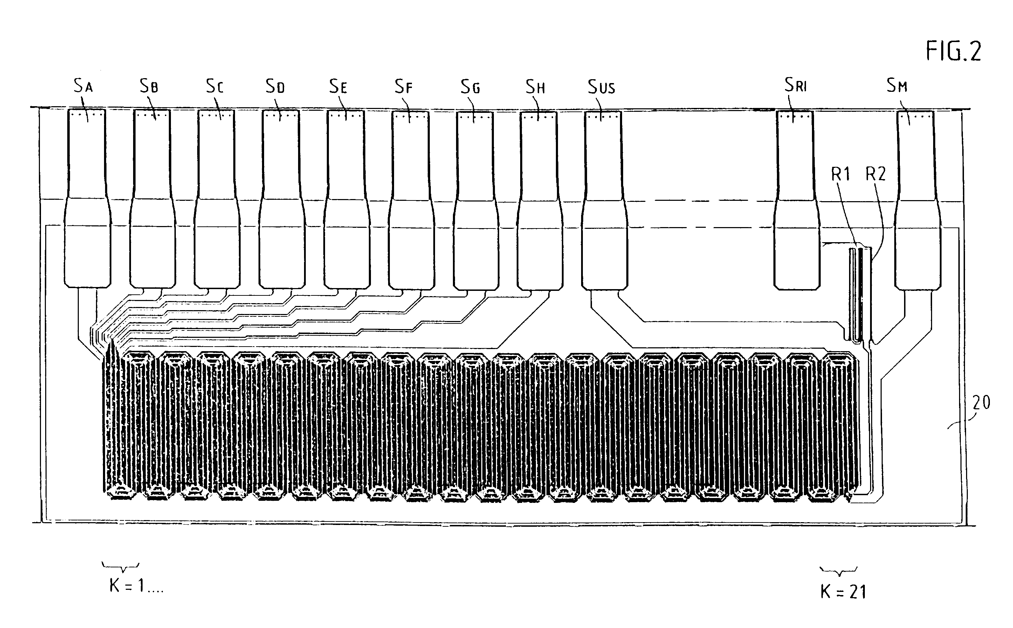

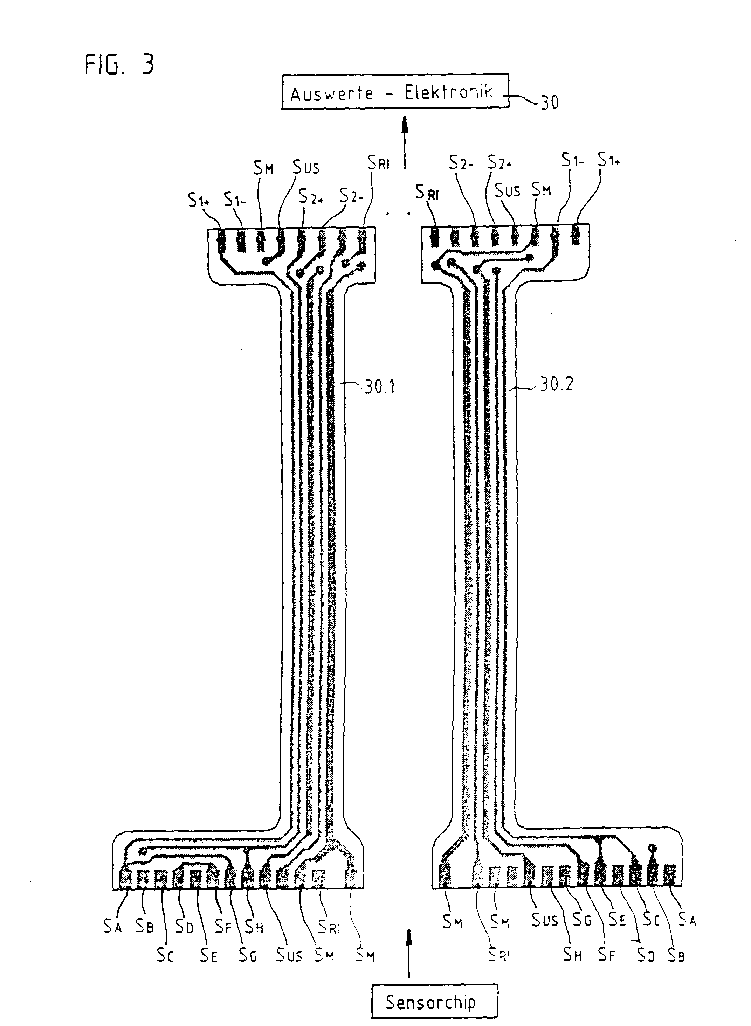

Vorzugsweise ist die erfindungsgemäße Sensoranordnung als Sensorchip ausgeführt, der ein Trägersubstrat umfaßt, z.B. Glas, auf dem die Schichtstreifen (A...H) und die Verbindungsleitungen angeordnet sind. Ebenfalls sind auf dem Trägersubstrat die erforderlichen Anschlußverbindungen zur nachgeordneten Auswerte-Elektronik vorgesehen. Ein konkretes Ausführungsbeispiel eines entsprechend aufgebauten Sensorchips wird im folgenden anhand der Figuren 2 und 3 noch detaillierter erläutert.

Alternativ zur dargestellten, bevorzugten Ausführungsform mit den acht Schichtstreifen (A...H) pro Gruppe können allgemein n Schichtstreifen pro Gruppe vorgesehen werden, je nach erforderlicher Meßauflösung und gewünschtem Aufwand. Es sind hierbei jedoch stets mindestens vier Schichtstreifen pro Gruppe erforderlich, d.h. es gilt n >= 4. Die Schichtstreifen weisen dann jeweils innerhalb einer Gruppe Abstände T/n zueinander auf.
Analog zur Ausführungsform in Figur 1A sind jeweils die m-ten Schichtstreifen der K-ten Gruppe seriell mit dem m-ten Schichtstreifen der (K+1)-ten Gruppe verbunden, d.h die Schichtstreifen der verschiedenen Gruppen sind seriell miteinander verschaltet. Die Verbindungsleitungen verlaufen ebenso S-förmig zwischen den benachbarten Gruppen ohne sich zu überkreuzen wie im vorab beschriebenen Ausführungsbeispiel.

In der dargestellten Ausführungsform der erfindungsgemäßen Sensoranordnung gemäß Figur 1A sind die von links aus ersten vier Schichtstreifen (A...D) der seriell verschalteten Gruppen jeweils mit einem Masseanschluß M verbunden, während die rechten vier Schichtstreifen (E...H) von einer Versorgungsspannung U_{S} gespeist werden.
Ferner sind in der Figur 1A die mit S_{A},..., S_{H} bezeichneten ausgangsseitigen Anschlußkontakte für die magnetoresistiven Schichtstreifen angedeutet, die zur weiteren Signalverarbeitung in der im folgenden beschriebenen Art und Weise verschaltet werden.

Wie in der Figur 1B dargestellt, werden die seriell vebundenen Schichtstreifen (A..H) aller Gruppen der Sensoranordnung in dieser Ausführungsform zu zwei Brückenschaltungen (B1, B2) verbunden. Jeder der dabei als einzelner Block innerhalb der Brückenschaltungen (B1, B2) dargestellte Schichtstreifen (A...H) umfaßt gemäß der oben erläuterten seriellen Schichtstreifen-Verschaltung jeweils eine Vielzahl von seriell verbundenen Schichtstreifen (A...H), die mit der Anzahl der vorgesehenen Gruppen übereinstimmt. Die Darstellung in Figur 1B mit nur je einem Schichtstreifen (A...H) pro Brücken-Viertelzweig wurde lediglich aus Gründen der Übersichtlichkeit gewählt. Die beiden Brückenschaltungen (B1, B2) sind dabei jeweils wie oben beschrieben mit einem Pol mit der Versorgungsspannung U_{S} verbunden, während ein anderer Pol mit dem Masseanschluß M verbunden wird.

Der erste Zweig der ersten Brückenschaltung B1 wird hierbei von den beiden Schichtstreifen bzw. Schichtstreifen-Gruppen A und G gebildet, der zweite Zweig von den Schichtstreifen E und C. An den beiden Signalabgriffen S₁₊ und S₁₋, d.h. den Mittenabgriffen der beiden Brücken, resultieren aufgrund der gewählten Schichtstreifen-Anordnung dann jeweils Ausgangssignale, die um 180° zueinander phasenversetzt sind. Der erste Zweig der zweiten Brückenschaltung B2 wird von den beiden Schichtstreifen H und B gebildet, während der zweite Zweig dieser Brücke die Schichtstreifen F und D umfaßt. Die an den Signalabgriffen S₂₊ und S₂₋ anliegenden periodischen Ausgangssignale sind ebenfalls um 180° zueinander phasenversetzt.

Bei einer Relativ-Bewegung zwischen der magnetischen Meßteilung und der erfindungsgemäßen Sensoranordnung liegen an den beiden Signalabgriffen S₁₊ und S₁₋ der beiden Halbbbrücken der ersten Brükkenschaltung (B1) gegenphasige, periodische Ausgangssignale mit der Phasenlage +/- 0° im Vergleich zu den ebenfalls gegenphasigen, periodischen Ausgangssignalen +/- 90° der Signalabgriffe S₂₊ und S₂₋ der Halbbrücken der zweiten Brückenschaltung (B2) an. Die an den Signalabgriffen S₁₊, S₁₋ und S₂₊, S₂₋ der jeweiligen Halbbrücken anliegenden, gegenphasigen periodischen Signale gelangen zunächst jeweils auf die Eingänge zweier - nicht dargestellter - Differenzverstärker. Die Differenzverstärker wiederum erzeugen um 90° zueinander versetzte Ausgangssignale S₁ und S₂. Diese phasenverschobenen Signale (S1, S2) werden anschließend in bekannter Art und Weise innerhalb einer Interpolatoreinheit weiterverarbeitet und gestatten neben der hochexakten Positionsbestimmung auch eine Richtungsdiskriminierung.

Eine Komplettansicht einer als Sensorchip ausgeführten erfindungsgemäßen magnetischen Sensoranordnung, die prinzipiell der Figur 1A entspricht, ist in Figur 2 dargestellt. Hierbei werden für die funktionsgleichen Elemente der Sensoranordnung im folgenden die identischen Bezugszeichen verwendet.
Auf einem Trägersubstrat (20) aus Glas sind in einer ersten Spur die magnetoresistiven Schichtstreifen aus Permalloy in insgesamt 21 Gruppen (K=1,..21) angeordnet; die Schichtstreifen sind wie vorab beschrieben über die S-förmig zwischen den Gruppen verlaufenden Verbindungsleitungen seriell miteinander verbunden. Von den acht Schichtstreifen der von links aus ersten Gruppe (K=1) führen elektrische Verbindungsleitungen zu acht nebeneinander auf dem Trägersubstrat (20) angeordneten, rechteckförmigen Anschlußkontakten (S_{A},...,S_{H}). Ferner sind zwei weitere Anschlußkontakte S_{US} sowie S_{M} vorgesehen, wobei die ersten vier Schichtstreifen (A...D) der 21. Schichtstreifen-Gruppe über den Anschlußkontakt S_{US} mit einer Versorgungsspannung U_{S} verbunden sind. Die zweiten vier Schichtstreifen (E..H) dieser Gruppe werden über den Anschlußkontakt S_{M} mit einem Masseanschluß M verschaltet.

Neben der ersten Sensor-Spur mit den entsprechend Figur 1A und 1B verschalteten Schichtstreifen ist parallel eine zweite Spur mit zwei magnetoresistiven Schichtstreifen (R1, R2) als Referenzsignal-Spur auf dem Trägersubstrat (20) vorgesehen. Die Schichtstreifen (Rl, R2) der Referenzsignal-Spur sind dabei genauso orientiert wie die der ersten Sensor-Spur, d.h. senkrecht zur abzutastenden Meßteilung. Für die Schichtstreifen (Rl, R2) der Referenzsignal-Spur ist ebenfalls ein Anschlußkontakt (S_{RI}) zum Abgreifen der im Meßbetrieb erzeugten Signale sowie ein weiterer Anschlußkontakt S_{M} als Masseverbindung auf dem Trägersubstrat angeordnet. Ferner werden auch die Referenzsignal-Schichtstreifen (R1, R2) mit der Versorgungsspannung bzw. dem entsprechenden Anschlußkontakt S_{US} verbunden. Die Verbindungsleitungen für die Schichtstreifen (R1, R2) der Referenzsignal-Spur werden ebenfalls kreuzungsfrei auf dem Trägersubstrat (20) geführt.

Die brückenweise Verschaltung der magnetoresistiven Schichtstreifen der ersten Signal-Spur erfolgt in der dargestellten Ausführung der magnetischen Sensoranordnung nicht vollständig auf dem Sensorchip, sondern teilweise in einem flexiblen Leiterband, welches mit den Anschlußkontakten (S_{A},..S_{M}) des Sensorchips verbunden wird. Diese Verbindung kann etwa über geeignete Lötverbindungen erfolgen, möglich sind alternativ auch entsprechende Steckverbindungen etc..

Das für den Sensorchip aus Figur 2 vorgesehene flexible Leiterband besteht aus den in Figur 3 dargestellten zwei Leiterband-Teilen (30.1, 30.2). Die beiden Leiterband-Teile (30.1, 30.2) werden zum Zusammenbau übereinandergeklappt, so daß im montierten Zustand ausgangsseitig die Brückensignale S₁₊, S₁₋ und S₂₊, S₂₋ gemäß der obigen Beschreibung abgegriffen und in den nachgeordneten Differenzverstärkern weiterverarbeitet werden können. Ebenso können am Leiterband ausgangsseitig dann die Referenzspur-Signale R_{I} abgegriffen werden. Über die Kontakte mit der Bezeichnung S_{US} und S_{M} erfolgt die Verbindung der erfindungsgemäßen Sensoranordnung mit der Versorgungsspannung und dem Masseanschluß.

Das linke Leiterbandteil (30.1) in Fig. 3 stellt die Unterseite des flexiblen Leiterbandes dar, während das rechte Leiterbandteil (30.2) die Oberseite des Leiterbandes darstellt. Unten sind jeweils die Anschlußverbindungen des Leiterbandes für den Sensorchip erkennbar, über die Leiterband und Sensorchip miteinander verbunden werden. Die Reihenfolge der Anschlußverbindungen des Leiterbandes ist selbstverständlich auf die entsprechenden Anschlußkontakte des Sensorchips abgestimmt, d.h. die linke Anschlußverbindung (S_{A}) des Leiterband-Unterteiles (30.1) wird mit dem von links aus ersten Anschlußkontakt (S_{A}) des Sensorchips verbunden usw.. Im montierten Zustand des Leiterbandes liegt somit der äußerst rechte Anschlußkontakt des oberen Leiterband-Teiles (30.2) auf dem von links aus ersten Anschlußkontakt des unteren Leiterband-Teiles etc.. Deutlich erkennbar ist aus der Darstellung der Figur 3, wie im fertig montierten Leiterband die brückenweise Verschaltung der Sensoranordnung realisiert wird. So werden die insgesamt 13 eingangsseitigen Anschlußverbindungen derart innerhalb des flexiblen Leiterbandes miteinander verschaltet, daß ausgangsseitig am Leiterband lediglich noch acht Anschlußkontakte resultieren und innerhalb des Leiterbandes die brückenweise Verschaltung gemäß der oben beschriebenen Figur 2 erfolgt.
Die in Figur 3 gewählten Bezeichnungen für die Anschlußkontakte und Signalabgriffe am Leiterband sind übereinstimmend mit der vorhergehenden Beschreibung.

Die sieben ausgangsseitigen Anschlußkontakte des flexiblen Leiterbandes werden wie vorab beschrieben mit einer Versorgungs-Spannungsquelle und einem Masse-Anschluß sowie einer nachfolgenden Auswertelektronik (30) verschaltet, die u.a. Differenzverstärker, Interpolationsbausteine etc. umfaßt. Details hierzu sind in Fig. 3 aus Übersichtlichkeitsgründen nicht dargestellt.

Durch die erfindungsgemäße, mindestens teilweise brückenweise Verschaltung im flexiblen Leiterband vereinfacht sich die Fertigung der erfindungsgemäßen Sensoranordnung, da keine komplexen Verschaltungsanordnungen auf dem Trägersubstrat gefertigt werden müssen. Zudem ergibt sich eine größere Flexibilität hinsichtlich eventuell gewünschter Alternativ-Verschaltungen der magnetoresistiven Schichtstreifen der Sensoranordnung. So können die Schichtstreifen ggf. auch anderweitig brückenweise verschaltet werden.

In der dargestellten Ausführung des Sensorchips weisen die magnetoresistiven Schichtstreifen eine Länge von 3000 µm und eine Breite von 25 µm auf. Die Abstände benachbarter Schichtstreifen betragen jeweils 50 µm, die Teilungsperiode T der magnetischen Meßteilung und somit der Abstand benachbarter Gruppen ist 400 µm gewählt.

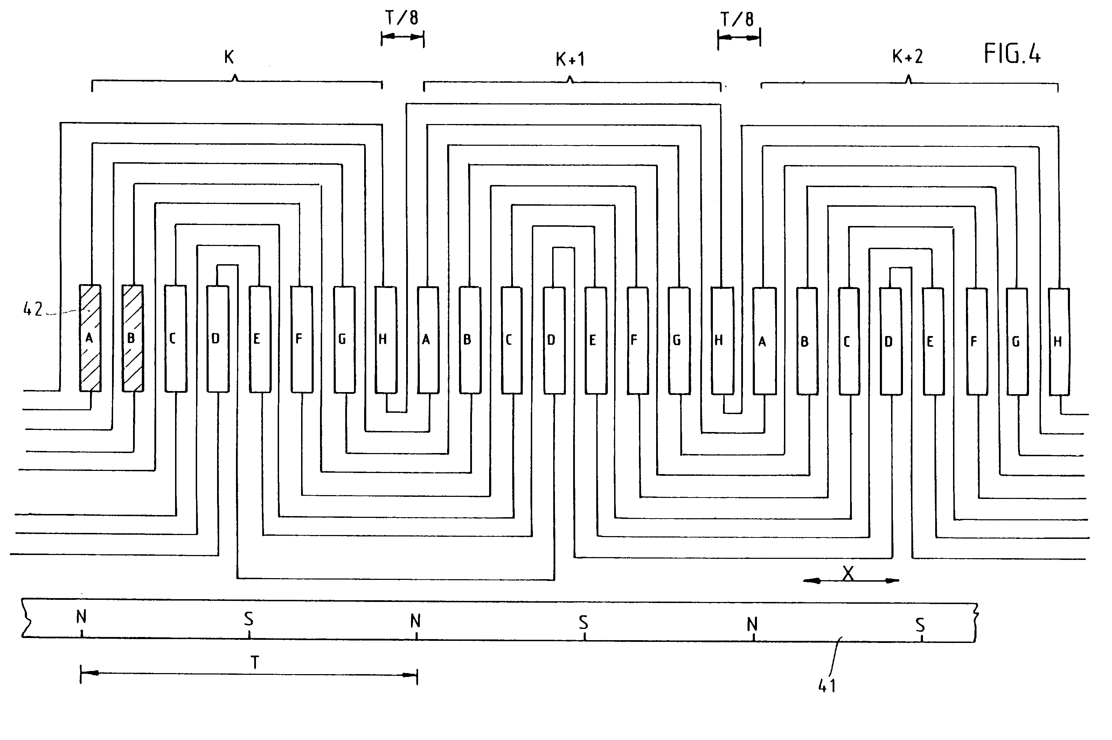

Eine weitere Ausführungsform der erfindungsgemäßen Sensoranordnung inclusive abgetasteter magnetischer Meßteilung (41) ist in Figur 4 schematisiert dargestellt. Wiederum sind Gruppen (K, K+1, K+2) von je acht parallel angeordneten magnetoresistiven Schichtstreifen (A...H) vorgesehen, wobei die Längsrichtung der Schichtstreifen (A...H) jeweils senkrecht zur Richtung x der Relativbewegung zwischen Sensoranordnung und Meßteilung (41) orientiert ist. Die Schichtstreifen (A...H) weisen innerhalb der Gruppen einen Abstand T/8 zueinander auf; mit T sei dabei wiederum die Teilungsperiode der magnetischen Meßteilung (41) bezeichnet wie im vorab beschriebenen Ausführungsbeispiel. Die einzelnen Achter-Gruppen von magnetoresistiven Schichtstreifen (A..H) sind nunmehr jedoch unmittelbar benachbart zueinander angeordnet, d.h. die aneinandergrenzenden Schichtstreifen (A...H) benachbarter Gruppen weisen ebenfalls einen Abstand T/8 zueinander auf.
Analog zur oben beschriebenen Ausführungs-Variante sind die m-ten Elemente der benachbarten Gruppen über elektrische Verbindungsleitungen jeweils miteinander verbunden. Der von links aus erste Schichtstreifen der K-ten Gruppe ist demzufolge seriell mit dem m-ten Schichstreifen der (K+1)-ten Gruppe verbunden etc.. Im Gegensatz zum vorab beschriebenen Ausführungsbeispiel verlaufen die Verbindungsleitungen nunmehr jedoch nicht mehr vollständig zwischen den benachbarten Gruppen, sondern werden so geführt, daß auch zwischen den magnetoresistiven Schichtstreifen (A...H) jeweils eine Verbindungsleitung verläuft. Die Verbindungsleitungen sind jedoch wiederum so angeordnet, daß keine Überkreuzungen miteinander bzw. mit den Schichtstreifen (A...H) resultieren, so daß wie vorab beschrieben eine problemlose Fertigung des Sensorchips möglich ist.

Ferner ist in dieser Ausführungsform der erfindungsgemäßen Sensoranordnung bei den beiden von links aus ersten Schichtstreifen (A, B) eine sogenannte Barberpole-Struktur schematisiert angedeutet, die auch die anderen Schichtstreifen (C...D) aufweisen können. Bei derartigen Barberpole-Strukturen handelt es sich um quer zur Längsrichtung der Schichtstreifen (A...H) angeordnete hochleitfähige Flußstreifen (42) aus Metall, die in bekannter Art und Weise zur Linearisierung der Ausgangscharakteristik magnetoresistiver Sensorelemente eingesetzt werden. Selbstverständlich können auch die Schichtstreifen der vorab erläuterten Ausführungsform eine solche Barberpole-Struktur aufweisen.

Auch diese Ausführungsform der erfindungsgemäßen Sensoranordnung läßt sich wie vorher erwähnt für Gruppen mit n magnetoresistiven Schichtstreifen pro Gruppe verallgemeinern, wobei wiederum n >= 4 gilt. Ferner können sich die Schichtstreifen einer Gruppe ggf. auch über mehr als eine Teilungsperiode der magnetischen Meßteilung erstrecken. In diesem Fall wären dann j*n Schichtstreifen pro Gruppe vorgesehen, mit j=1, 2, 3.... und j>=1.

Die brückenweise Verschaltung dieser Ausführungsform der erfindungsgemäßen Sensoranordnung kann in analoger Weise zum vorab beschriebenen Ausführungsbeispiel erfolgen. Ebenso ist es wiederum vorteilhaft, die gewünschte Verschaltung zumindest teilweise innerhalb eines flexiblen Leiterbandes vorzunehmen, das mit den Anschlußkontatkten eines entsprechend aufgebauten Sensorchips verbunden wird.

## Patentansprüche

1. Magnetische Sensoranordnung zur Abtastung einer magnetischen Meßteilung (1, 41) mit einer definierten Teilungsperiode T, bei der magnetoresistive Schichtstreifen gruppenweise und parallel zueinander angeordnet sind, wobei
- jede Gruppe sich mindestens über j Teilungsperioden T erstreckt und pro Teilungsperiode (T) n Schichtstreifen (A...H) im Abstand T/n zueinander angeordnet sind, mit n >= 4 und j >= 1,
- jeweils der m-te Schichtstreifen (A...H) der k-ten Gruppe über eine Verbindungsleitung elektrisch mit dem m-ten Schichtstreifen (A...H) der (k+1)-ten Gruppe verbunden ist,
dadurch gekennzeichnet, daß
die elektrischen Verbindungsleitungen der benachbarten Gruppen in einer Ebene und zumindest teilweise zwischen den Gruppen verlaufen, ohne sich zu überkreuzen, wobei sowohl die magnetoresistiven Schichtstreifen (A...H) als auch die elektrischen Verbindungsleitungen in einer gemeinsamen Ebene auf einem Trägersubstrat (20) angeordnet sind und das Trägersubstrat (20) ferner elektrische Anschlußverbindungen (S_{A},...S_{H}, S_{US}, S_{M}, S_{RI}) aufweist.

2. Magnetische Sensoranordnung nach Anspruch 1, dadurch gekennzeichnet, daß die Anschlußverbindungen (S_{A},...S_{H}, S_{US},S_{M}, S_{RI}) mit einem flexiblen Leiterband verbunden sind.

3. Magnetische Sensoranordnung nach Anspruch 2, dadurch gekennzeichnet, daß die magnetoresistiven Schichtstreifen (A...H) auf dem flexiblen Leiterband brückenweise verschaltet sind.

4. Magnetische Sensoranordnung nach Anspruch 1, dadurch gekennzeichnet, daß die magnetoresistiven Schichtstreifen (A...H) in einer Barberpole-Konfiguration, versehen mit schräg zur Längsachse angeordneten hochleitfähigen Flußstreifen (42), ausgeführt sind.

5. Magnetische Sensoranordnung nach Anspruch 1 mit n=8 und j=1, einer Meßteilungsperiode T=400 mm, und einer Breite d=35 mm der magnetoresistiven Schichtstreifen (A...H).

6. Magnetische Sensoranordnung nach mindestens einem der Ansprüche 1-5, dadurch gekennzeichnet, daß die einzelnen Gruppen von magnetoresistven Schichtstreifen (A...H) jeweils im Abstand T in Meßrichtung (x) zueinander angeordnet sind.

7. Magnetische Sensoranordnung nach Anspruch 6, dadurch gekennzeichnet, daß die elektrischen Verbindungsleitungen der Schichtstreifen (A...H) im wesentlichen S-förmig zwischen den Gruppen verlaufend angeordnet sind.

8. Magnetische Sensoranordnung nach Anspruch 6, dadurch gekennzeichnet, daß Schichtstreifen (A...H) benachbarter Gruppen seriell verbunden sind und zu zwei Vollbrücken (B1, B2) verschaltet sind, die jeweils zwei Mittenabgriffe (S₁₊, S_{1-'} S₂₊, S₂₋) aufweisen, an denen bei einer Relativbewegung zwischen der Sensoranordnung und der magnetischen Meßteilung (1, 41) um 180° gegenphasig versetzte Signale anliegen, dadurch gekennzeichnet, daß die Ausgangssignale der beiden Vollbrücken (B1, B2) in ihrer Phasenlage um 90° zueinander versetzt sind.

9. Magnetische Sensoranordnung nach mindestens einem der Ansprüche 1-6, dadurch gekennzeichnet, daß die einzelnen Gruppen von magnetoresistiven Schichtstreifen jeweils im Abstand T/n in Meßrichtung (x) zueinander angeordnet sind.

10. Magnetische Sensoranordnung nach Anspruch 9, dadurch gekennzeichnet, daß alle elektrischen Verbindungsleitungen mindestens teilweise zwischen den einzelnen magnetoresistiven Schichtstreifen verlaufend angeordnet sind.

11. Magnetische Sensoranordnung nach Anspruch 1, dadurch gekennzeichnet, daß neben einer ersten Signalspur mit mehreren Gruppen magnetoresistiver Schichtstreifen (A...H) eine zweite, parallele Referenzsignal-Spur mit mindestens einem magnetoresistiven Schichtstreifen (R1, R2) zur Erzeugung von Referenz-lmpulsen angeordnet ist.

12. Magnetisches Meßsystem zur Bestimmung der Relativlage zweier zueinander beweglicher Objekte mit einer magnetischen Meßteilung (1, 41) und einer magnetischen Sensoranordnung nach mindestens einem der vorangehenden Ansprüche zur Gewinnung positionsabhängiger Ausgangssignale.

## Claims

1. A magnetic sensor arrangement for sensing a magnetic measuring graduation (1, 41) with a defined graduation period T, in which magneto-resistive layer strips are arranged in groups and parallel to one another, wherein
- each group extends over at least j graduation periods T and n layer strips (A...H) per graduation period (T) are arranged at a spacing from one another of T/n, with n>=4 and j>=1,
- each of the m'th layer strips (A...H) of the k'th group is electrically connected to the m'th layer strip (A...H) of the (k+1)'th group,
characterized in that
the electrical connecting lines of adjacent groups run in a plane and at least partially between the groups, without crossing over, wherein both the magneto-resistive layer strips (A...H) and the electrical connecting lines are arranged in a common plane on a supporting substrate (20) and the supporting substrate (20) further comprises terminal connections (S_{A}...S_{H}, S_{US}, S_{M}, S_{RI}).

2. A magnetic sensor arrangement according to claim 1, characterized in that the terminal connections (S_{A}...S_{H}, S_{US}, S_{M,} S_{RI}) are connected to a flexible conductor strip.

3. A magnetic sensor arrangement according to claim 2, characterized in that the magneto-resistive layer strips (A...H) are interconnected in bridge manner on the flexible conductor strip.

4. A magnetic sensor arrangement according to claim 1, characterized in that the magneto-resistive layer strips (A...H) are implemented in a barbers pole configuration, provided with highly conductive flow strips (42) arranged obliquely relative to the longitudinal axis.

5. A magnetic sensor arrangement according to claim 1 with n = 8 and j = 1, a measuring graduation period T= 400 mm and a width d = 35 mm of the magneto-resistive layer strips (A...H).

6. A magnetic sensor arrangement according to at least one of claims 1 to 5, characterized in that the individual groups of magneto-resistive layer strips (A...H) are each arranged a distance T from one another in the measuring direction (x).

7. A magnetic sensor arrangement according to claim 6, characterized in that the electrical connecting lines of the layer strips (A...H) are arranged in substantially S-shape between the groups.

8. A magnetic sensor arrangement according to claim 6, characterized in that the layer strips (A...H) of adjacent groups are connected in series and interconnected in two full bridges (B1, B2), which each have two middle terminals (S₁₊, S₁₋, S₂₊, S₂₋), at which signals offset in phase opposition by 180° appear with relative movement between the sensor arrangement and the magnetic measuring graduation (1, 41), characterized in that the output signals of the two full bridges (B1, B2) are offset in their phase angle by 90° relative to one another.

9. A magnetic sensor arrangement according to at least one of claims 1 to 5, characterized in that the individual groups of magneto-resistive layer strips are each arranged at a spacing T/n from one another in the measuring direction (x).

10. A magnetic sensor arrangement according to claim 9, characterized in that all electrical connecting lines are at least partially arranged to run between the individual magneto-resistive layer strips.

11. A magnetic sensor arrangement according to claim 1, characterized in that, in addition to a first signal track with a plurality of groups of magneto-resistive layer strips (A...H) there is provided a second, parallel, reference signal track with at least one magneto-resistive layer strip (R1, R2) for generating reference pulses.

12. A magnetic measuring system for determining the relative position of two objects movable relative to one another, with a magnetic measuring graduation (1, 41) and a magnetic sensor arrangement according to at least one of the preceding claims for deriving position dependent output signals.

## Revendications

1. Agencement détecteur magnétique pour l'exploration d'une division de mesure magnétique (1, 41) présentant une période de division T définie, avec des bandes stratifiées magnétorésistives agencées par groupes et parallèlement les unes aux autres, agencement dans lequel
- chaque groupe s'étend au moins sur j périodes de division T et n bandes stratifiées (A...H) sont disposées à une distance T/n les uns des autres dans chaque période de division (T), avec n > = 4 et j > =1,
- la m-ième bande stratifiée (A...H) du k-ième groupe étant reliée respectivement par une ligne de liaison électriquement à la m-ième bande stratifiée (A...H) du (k+1)-ième groupe,
caractérisé par le fait que
les lignes de liaison électriques des groupes voisins s'étendent dans un plan et au moins partiellement entre les groupes sans se croiser, aussi bien les bandes stratifiées magnétorésistives (A...H) que les lignes de liaison électriques étant disposées dans un plan commun sur un substrat de support (20) et le substrat de support (20) présentant en outre des liaisons de connexion électriques (SA,...SH, SUS, SM, SRI).

2. Agencement détecteur magnétique suivant la revendication 1, caractérisé par le fait que les liaisons de connexion (SA,...SH, SUS, SM, SRI) sont reliées à une bande flexible de conducteurs.

3. Agencement détecteur magnétique suivant la revendication 2, caractérisé par le fait que les bandes stratifiées magnétorésistives (A...H) sont montées en pont sur la bande flexible de conducteurs.

4. Agencement détecteur magnétique suivant la revendication 1, caractérisé par le fait que les bandes stratifiées magnétorésistives (A...H) sont réalisées sous la forme d'une configuration " Barberpole ", étant munie de bandes de flux (42) fortement conductrices, disposées de façon oblique par rapport à l'axe longitudinal.

5. Agencement détecteur magnétique suivant la revendication 1, avec n = 8 et j = 1, une période de division de mesure T = 40 mm, et une largeur d = 35 mm des bandes stratifiées magnétorésistives (A...H).

6. Agencement détecteur magnétique suivant au moins l'une des revendications 1-5, caractérisé par le fait que les différents groupes des bandes stratifiées magnétorésistives (A...H) sont disposés respectivement à une distance T les uns des autres dans la direction de mesure (x).

7. Agencement détecteur magnétique suivant la revendication 6, caractérisé par le fait que les lignes de liaison électriques des bandes stratifiées (A...H) s'étendent essentiellement en S entre les groupes.

8. Agencement détecteur magnétique suivant la revendication 6, caractérisé par le fait que les bandes stratifiées (A...H) des groupes voisins sont reliées de façon sérielle et sont connectées en deux ponts complets (B1, B2) présentant respectivement deux prises médianes (S1+, S1-, S2+, S2-) auxquelles apparaissent, en cas de mouvement relatif entre l'agencement détecteur et la division de mesure magnétique (1, 41), des signaux déphasés de 180°, caractérisé par le fait que les signaux de sortie des deux ponts complets (B1, B2) sont déphasés de 90°.

9. Agencement détecteur magnétique suivant au moins l'une des revendications 1-6, caractérisé par le fait que les différents groupes de bandes stratifiées magnétorésistives sont disposés respectivement à une distance T/n les uns des autres dans la direction de mesure (x).

10. Agencement détecteur magnétique suivant la revendication 9, caractérisé par le fait que toutes les lignes de liaison électriques sont disposées de manière à s'étendre au moins partiellement entre les différentes bandes stratifiées magnétorésistives.

11. Agencement détecteur magnétique suivant la revendication 1, caractérisé par le fait qu'il comprend, à côté d'une première piste de signal avec plusieurs groupes de bandes stratifiées magnétorésistives (A...H), une deuxième piste de signal de référence parallèle avec au moins une bande stratifiée magnétorésistive (R1, R2) pour produire des impulsions de référence.

12. Système de mesure magnétique pour déterminer la position relative de deux objets mobiles l'un par rapport à l'autre, comprenant une division de mesure magnétique (1, 41) et un agencement détecteur magnétique suivant au moins l'une des revendications précédentes, pour produire des signaux de sortie variables en fonction de la position.
